(19) Europäisches Patentamt
European Patent Office
Office européen des brevets

(11) Numéro de publication : **0 311 478 B1**

(12) **FASCICULE DE BREVET EUROPEEN**

(45) Date de publication du fascicule du brevet :
17.07.91 Bulletin 91/29

(51) Int. Cl.⁵ : **F16H 25/24, B60N 2/06**

(21) Numéro de dépôt : 88402412.6

(22) Date de dépôt : 23.09.88

(54) Vérin à vis à sécurité de surcharge pour élément déplaçable, tel qu'un siège.

(30) Priorité : 08.10.87 FR 8713917

(43) Date de publication de la demande :
12.04.89 Bulletin 89/15

(45) Mention de la délivrance du brevet :
17.07.91 Bulletin 91/29

(84) Etats contractants désignés :
DE ES GB IT SE

(56) Documents cités :
DE-C- 853 082
GB-A- 652 199
GB-A- 2 042 061
US-A- 3 309 060

(73) Titulaire : ROCKWELL AUTOMOTIVE BODY
SYSTEMS-FRANCE EN ABREGE:ROCKWELL
ABS-FRANCE
Tour Gan Cédex 13
F-92082 Paris La Defense 2 (FR)

(72) Inventeur : Periou, Pierre
15 Les Boccages Bruns
F-95000 Cergy Pontoise (FR)

(74) Mandataire : Martin, Jean-Paul et al
c/o CABINET LAVOIX 2, Place d'Estienne
d'Orves
F-75441 Paris Cedex 09 (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un vérin à vis à sécurité de surcharge destiné au réglage d'un élément déplaçable tel que par exemple un siège de véhicule automobile.

On connaît, par le document GB-A-2042061 un dispositif de réglage de la position d'un élément déplaçable dans un véhicule, comprenant un vérin à vis primaire tubulaire mobile en rotation et en translation, pourvue d'un filetage extérieur et d'un filetage intérieur de pas contraires, une vis secondaire fixe, engagée dans le filetage intérieur de la vis primaire, et un écrou solidaire de l'élément déplaçable, cet écrou engrenant avec le filetage extérieur de la vis primaire.

Ce vérin téléscopique permet d'obtenir une course importante sous un faible volume, mais présente l'inconvénient consistant dans un pourcentage de pertes très élevées par frottements (environ 50%) entre, d'une part la vis tubulaire et l'écrou fixe, et d'autre part la vis tubulaire et la vis secondaire.

L'invention a donc pour but de réaliser un vérin du type mentionné ci-dessus, dans lequel le rendement est considérablement amélioré par une diminution importante des pertes par frottements, et ce tout en conservant une résistance mécanique suffisante en cas de surcharge, par exemple à la suite d'un choc violent si l'élément déplaçable associé à ce vérin est un siège de véhicule.

Suivant l'invention, le vérin est caractérisé en ce que l'écrou est composite et comprend un premier écrou en une matière plastique à bon coefficient de frottement, et un second écrou en une matière mécaniquement résistante.

En effet, l'utilisation d'une matière plastique appropriée à bon coefficient de frottement, permet de diminuer considérablement les pertes et d'augmenter le rendement. Mais la résistance d'une telle matière plastique est insuffisante lorsque le vérin subit des efforts très élevés, par exemple à l'occasion d'une collision lorsque le vérin est utilisé pour le réglage longitudinal d'un siège de véhicule. Le second écrou assure alors la sécurité du dispositif en absorbant cet effort exceptionnel.

A titre d'exemple le second écrou peut être réalisé en acier.

Suivant une particularité de l'invention, le premier écrou engrène sans jeu sur le filetage de la vis primaire, tandis que le second écrou est muni d'un filetage présentant un jeu avec celui de la vis primaire. Ce jeu est absorbé lorsque l'effort exercé sur le vérin dépasse une valeur maximum supportable sans rupture par le premier écrou.

Ainsi, en cas de surcharge consécutive à un choc brutal, le premier écrou cède et la surcharge est absorbée par le second écrou après rattrapage du jeu entre celui-ci et le filetage de la vis primaire.

D'autres particularités et avantages de l'invention apparaîtront au cours de la description qui va suivre, faite en référence aux dessins annexés qui en illustrent deux formes de réalisation à titre d'exemples non limitatifs.

— la Fig. 1 est une vue en élévation latérale simplifiée d'un siège de véhicule automobile muni d'un vérin à vis selon l'invention pour le réglage longitudinal de ce siège ;

— la Fig. 2 est une vue en élévation longitudinale à échelle agrandie du dispositif de vérin téléscopique à vis équipant le siège de la Fig. 1 ;

— la Fig. 3 est une vue en coupe axiale d'une première forme de réalisation du vérin à vis selon l'invention suivant 3-3 de la Fig. 4 ;

— la Fig. 4 est une vue en coupe transversale du vérin à vis suivant 4-4 de la Fig. 3 ;

— la Fig. 5 est une vue en coupe axiale partielle à échelle agrandie du vérin à vis des Figs 3 et 4, au niveau de son écrou composite ;

— la Fig. 6 est une vue en coupe axiale partielle analogue à la Fig. 5 d'une seconde forme de réalisation du vérin à vis selon l'invention ;

— la Fig. 7 est une vue en perspective de l'écrou du vérin à vis de la Fig. 6.

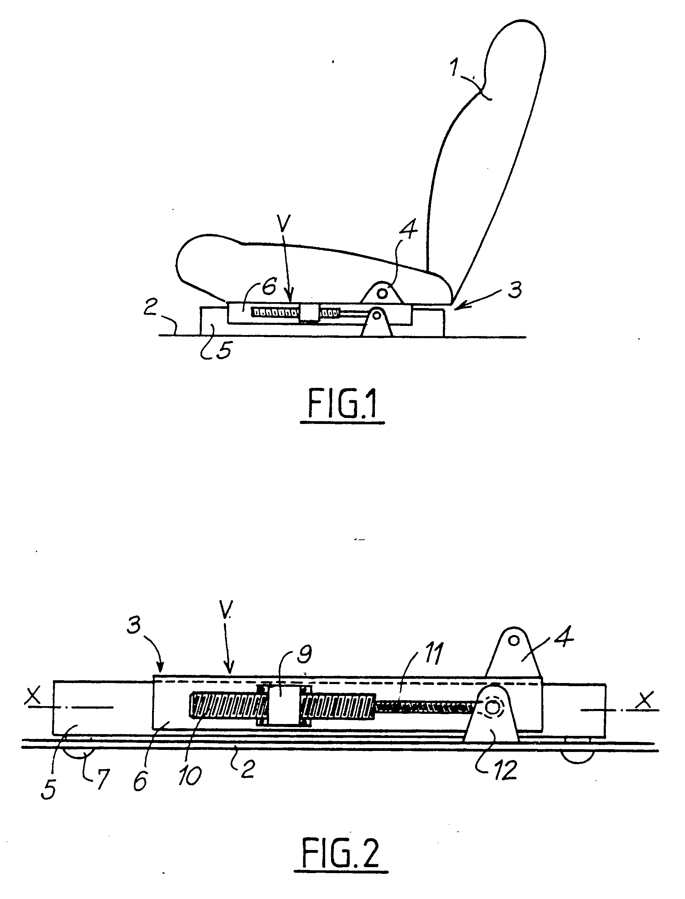

On voit à la Fig. 1 un siège 1, par exemple de véhicule automobile, monté sur un plancher fixe 2 et déplaçable longitudinalement sur celui-ci au moyen d'un ensemble 3 de glissières. L'ensemble 3 comprend un coulisseau 6 solidaire du siège 1 et qui porte une attache 4 de ceinture de sécurité (non représentée) et une glissière 5 fixée au plancher 2 par des vis 7, et sur laquelle le coulisseau 6 peut être déplacé longitudinalement en même temps que le siège 1 pour régler la position de celui-ci.

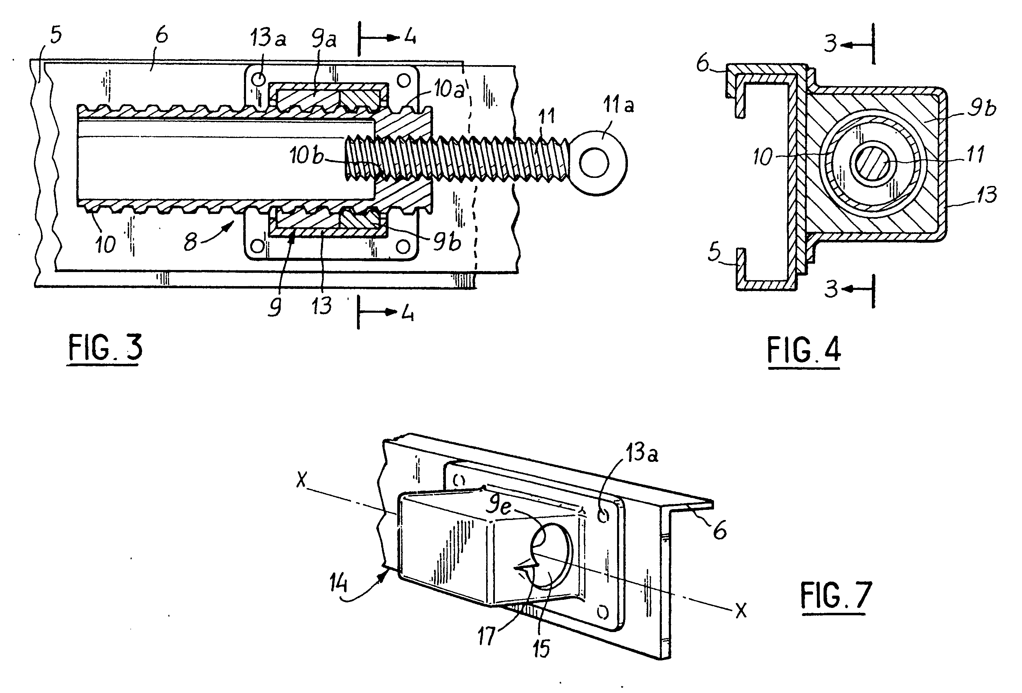

Le coulisseau 6 est équipé d'un vérin téléscopique V à sécurité de surcharge et qui permet le réglage de la position longitudinale du siège 1. Le vérin V est décrit ci-après en référence plus particulièrement aux figures 2 à 5.

Ce vérin V comprend une vis primaire tubulaire 10, qui peut être entraînée en rotation et en translation par des moyens connus en soi et non représentés, tels que ceux décrits dans le document précité, de préférence motorisés. La vis primaire 10 est pourvue d'un filetage extérieur 10a et d'un filetage intérieur 10b dont les pas sont contraires, le filetage intérieur 10b n'étant formé que sur une partie de la longueur de la vis 10 à partir de l'une de ses extrémités.

Le vérin V comprend également une vis secondaire fixe 11 engagée dans le filetage intérieur 10b, avec lequel elle est en prise et dont une extrémité 11a est articulée sur une bride 12 fixée au plancher 2 du véhicule. Enfin le vérin V comprend un écrou 9 engrenant avec le filetage extérieur 10a de la vis primaire 10. L'écrou 9 est logé dans une cage 13 fixée sur le coulisseau 6 par tout moyen approprié, par exemple par des points de soudure 13a.

L'écrou 9 est composite et comprend un premier écrou 9a réalisé en une matière plastique à bon coefficient de frottement, tel que par exemple un polyacétal, et un second écrou 9b constitué en une matière mécaniquement beaucoup plus résistante que le plastique de l'écrou 9a, par exemple de l'acier.

A titre indicatif numérique, la matière dont est constitué l'écrou 9a est choisie de manière que celui-ci puisse résister à des efforts axiaux habituels de 100 daN environ, tandis que la matière de l'écrou 9B est choisie pour que celui-ci puisse résister sans rupture à des efforts axiaux exceptionnels pouvant atteindre 2000 daN.

Les vis 10 et 11 et l'écrou 9 ont un axe commun X parallèle au coulisseau 6.

Les deux écrous 9a et 9b sont placés côte à côte dans la cage 13, l'écrou 9b étant placé d'un côté ou de l'autre de celui-ci.

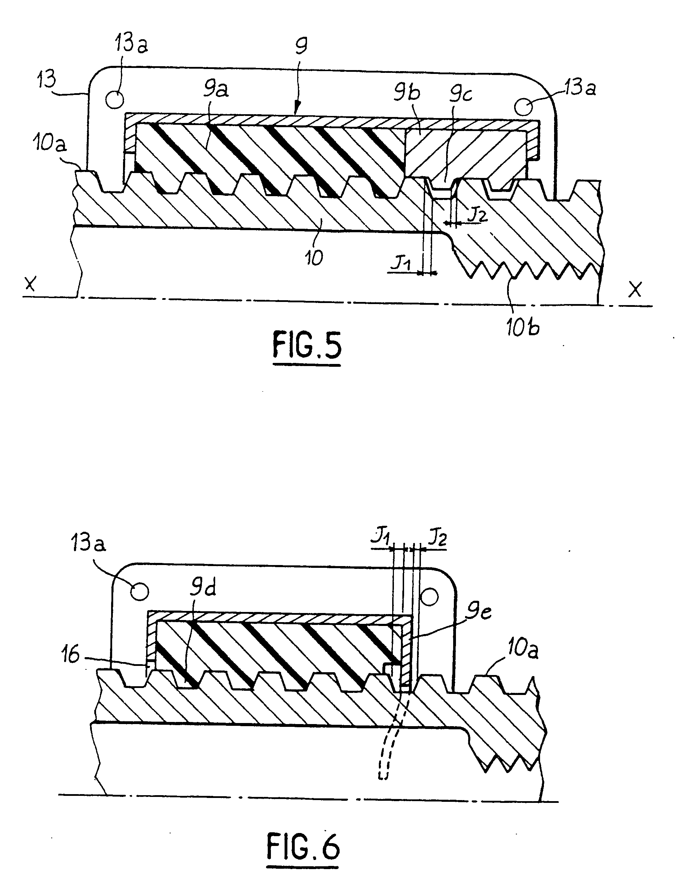

L'écrou 9a est réalisé avec un filetage qui engrène sans jeu sur le filetage 10a de la vis 10, tandis que le second écrou 9b est muni d'un filetage 9c présentant un jeu J (Fig. 5) avec celui de la vis primaire 10.

Avantageusement, le jeu J est partagé entre les jeux J1 et J2 de façon à assurer les mêmes propriétés dans les deux sens de marche.

L'effet technique du vérin à vis qui vient d'être décrit est le suivant : en fonctionnement normal c'est-dire lorsque l'élément déplaçable dont la position doit être réglée par le vérin V, par exemple un siège 1 de véhicule automobile, ne subit que des efforts axiaux d'amplitude normale, ceux-ci sont absorbés par l'écrou 9a dont le frottement sur la vis primaire 10 est très faible, ce qui assure au vérin un excellent rendement. Par contre, en cas de surcharge axiale exceptionnelle, notamment provoquée par une collision du véhicule équipé du siège 1, l'écrou plastique 9a cède et l'écrou 9b prend le relais après rattrapage du jeu J1 ou J2. Le filetage 9c de l'écrou 9b coopère alors avec le filetage 10a de telle sorte que l'écrou 9b, maintenu par la cage 13 solidaire du coulisseau 6, résiste à cette surcharge brutale et empêche l'arrachage du siège 1 des vis 10 et 11, assurant ainsi la sécurité recherchée dans un tel cas.

La seconde forme de réalisation du vérin à vis selon l'invention, illustrée aux figures 6 et 7, diffère de la précédente essentiellement par le fait que le second écrou résistant fait ici partie intégrante de la cage contenant le premier écrou.

En effet, dans ce mode de réalisation l'écrou 9d en matière plastique est contenu dans une cage 14 dont l'une 15 de ses ouvertures 15, 16 traversée par la vis primaire 10 est délimitée par un pourtour 9e en forme de filet. Ce filet 9e présente une extrémité saillante 17 décalée axialement d'un pas par rapport à la partie diamétralement opposée du filet, l'épaisseur du filet du pourtour 9e déterminant les jeux J1 et J2.

En cas de surcharge exceptionnelle exercée axialement sur le vérin, cette surcharge est absorbée par le filet 9e formant écrou de sécurité et après rattrapage du jeu J1 ou J2.

L'invention n'est pas limitée au deux formes de réalisation décrites ci-dessus et peut comporter des variantes d'exécution dans le cadre des revendications annexées. De plus le vérin à vis conforme à l'invention est susceptible de recevoir de nombreuses applications en dehors de celle décrite ci-dessus pour un siège de véhicule automobile, tout élément déplaçable susceptible de recevoir des surcharges exceptionnelles pouvant être équipé de ce vérin.

## Revendications

1. Vérin (V) à vis à sécurité de surcharge pour un élément déplaçable, tel qu'un siège (1), comprenant une vis primaire tubulaire (10) mobile en rotation et en translation, pourvue d'un filetage extérieur (10a) et d'un filetage intérieur (10b) de pas contraires, une vis secondaire fixe (11) engagée dans le filetage intérieur (10b) de la vis primaire (10) un écrou (9) solidaire de l'élément déplaçable, cet écrou (9) engrenant avec le filetage extérieur (10a) de la vis primaire (10), caractérisé en ce que l'écrou (9) est composite et comprend un premier écrou (9a) en une matière plastique à bon coefficient de frottement, et un second écrou (9b) en une matière mécaniquement résistante.

2. Vérin selon la revendication 1, caractérisé en ce que le premier écrou (9a, 9d) engrène sans jeu sur le filetage (10a) de la vis primaire (10), tandis que le second écrou (9b) est muni d'un filetage présentant un jeu (J) avec celui (10b) de la vis primaire (10), ce jeu (J) étant absorbé lorsque l'effort exercé sur le vérin excède une valeur maximum supportable sans rupture par le premier écrou (9a, 9d).

3. Vérin selon l'une des revendications 1 ou 2, caractérisé en ce que le premier et le second écrous (9a, 9b) sont logés dans une cage (13) adaptée pour être solidarisée avec l'élément déplaçable (7).

4. Vérin selon l'une des revendications 1 ou 2, caractérisé en ce que le second écrou (9e) fait partie intégrante d'une cage (14) contenant le premier écrou (9d) et adaptée pour être solidarisée avec l'élément déplaçable (1) ledit second écrou (9e) étant formé par un filet ménagé sur le pourtour d'une ouverture (15) de la cage (14) traversée par la vis primaire (10).

## Patentansprüche

1. Schraubverstellvorrichtung (V) mit Überlastsicherheit, für ein verschiebbares Element, etwa einen Sitz (1) mit einer in Rotation und Translation beweglichen rohrförmigen Primärschraube (10), welche mit einem Außengewinde (10a) und einem Innengewinde (10b) mit entgegengesetzten Gängen versehen ist, einer feststehenden Sekundärschraube (11), die in das Innengewinde (10b) der Primärschraube (10) eingefügt ist, einer mit dem verschiebbaren Element fest verbundenen Mutter (9), wobei diese Mutter (9) mit dem Außengewinde (10a) der Primärschraube (10) im Eingriff ist, dadurch gekennzeichnet, daß die Mutter (9) zusammengesetzt ist und eine erste Mutter (9a) aus einem Kunststoff mit gutem Reibungskoeffizienten und eine zweite Mutter (9b) aus einem mechanisch widerstandsfähigen Material umfaßt.

2. Verstellvorrichtung nach Anspruch 1, dadurch gekennzeichnet, daß die erste Mutter (9a, 9d) ohne Spiel auf das Gewinde (10a) der Primärschraube (10) aufgreift, während die zweite Mutter (9b) mit einem Gewinde versehen ist, welches ein Spiel (J) mit dem (10b) der Primärschraube (10) aufweist, wobei dieses Spiel (J) absorbiert wird, wenn die auf die Verstellvorrichtung ausgeübte Kraft einen Maximalwert überschreitet, dem ohne Bruch die erste Mutter (9a, 9d) standahalten kann.

3. Verstellvorrichtung nach einem der Ansprüche 1 oder 2, dadurch gekennzeichnet, daß die erste und zweite Mutter (9a, 9b) in einem Käfig (13) untergebracht sind, welcher für eine feste Verbindung mit dem verschiebbaren Element (7) eingerichtet ist.

4. Verstellvorrichtung nach einem der Ansprüche 1 oder 2, dadurch gekennzeichnet, daß die zweite Mutter (9e) integralen Teil eines Käfigs (14) bildet, welcher die erste Mutter (9d) enthält und für eine feste Verbindung mit dem verschiebbaren Element (1) eingerichtet ist, wobei die Zweite Mutter (9e) durch ein Gewinde gebildet ist, welches auf dem Rand einer von der Primärschraube (10) durchsetzten Öffnung (15) des Käfigs (14) ausgebildet ist.

## Claims

1. Overload-protected screw jack for an adjustable device such as a seat comprising a tubular primary screw (10) movable in rotation and in translation and provided with an outer screw thread (10a) and an inner screw thread (10b) of opposite hands, a fixed secondary screw (11) engaged in the inner screw thread (10b) of the primary screw (10), a nut (9) integral with the adjustable device, this nut (9) engaging with the outer screw thread (10a) of the primary screw (10), characterised in that the nut (9) is composite and comprises a first nut (9a) of a plastics material which has a good coefficient of friction, and a second nut (9b) of a mechanically strong material.

2. A jack according to Claim 1, characterised in that the first nut (9a, 9d) engages without clearance on the screw thread (10a) of the primary screw (10) while the second nut (9b) is provided with a screw thread which defines a clearance (J) with the screw thread of the primary screw (10), this clearance (J) being absorbed when the force exerted on the jack exceeds a maximum value that the first nut (9a, 9d) is capable of withstanding without breaking.

3. A jack according to either of Claims 1 or 2, characterised in that the first nut and second nut (9a, 9b) are disposed within a cage (13) adapted to he integral with the adjustable device.

4. A jack according to either of Claims 1 and 2, characterised in that the second nut (9e) is an integral part of a cage (14) which contains the first nut (9d), and is adapted to be integral with the adjustable device (1), said second nut (9e) being formed by a screw thread provided on the periphery of an opening (15) of the cage (14) through which the primary screw (10) extends.

FIG.1

FIG.2

FIG. 3

FIG. 4

FIG. 7

EP 0 311 478 B1

FIG.5

FIG.6